# EUROPÄISCHE PATENTANMELDUNG

(11) **EP 1 146 369 A2**
(43) Veröffentlichungstag der Anmeldung: **17.10.2001**
(21) Anmeldenummer: 01108510.7
(22) Anmeldetag: 04.04.2001
(51) Int. Cl.: G02B 6/38

(54) **Steckverbinder für Lichtleiter**

(30) Priorität: 11.04.2000 DE 10018016
(71) Anmelder: Delphi Technologies, Inc., Troy, MI 48007 (US)
(72) Erfinder: Uc, Kamil, 42115 Wuppertal (DE); Herlitz, Martin, 42897 Remscheid (DE); Schekalla, Peter P., 42329 Wuppertal (DE); Halbach, Paul Gerhard J., 42369 Wuppertal (DE)
(74) Vertreter: Manitz, Finsterwald & Partner Gbr

(57) **Zusammenfassung**

Ein Steckverbinder (10) für Lichtleiter umfaßt zwei zusammensteckbare Verbinderteile (12,14), von denen wenigstens eines mit einer optischen Ferrule (16) versehen ist. Der Steckverbinder (10) umfaßt überdies eine Verriegelungsvorrichtung (18), über die die einem ersten Verbinderteil (12) zugerodnete Ferrule (16) mit dem anderen Verbinderteil (14) verriegelbar ist, und eine von dieser Verriegelungsvorrichtung (18) unabhängige Gehäusezusatzverriegelung (19), über die das Gehäuse (12') des ersten Verbinderteils (12) mit dem anderen Verbinderteil (14) verriegelbar ist.

## Beschreibung

Die Erfindung betrifft einen Steckverbinder für Lichtleiter, mit zwei zusammensteckbaren Verbinderteilen, von denen wenigstens eines mit einer optischen Ferrule versehen ist.

Bei einem in der DE 1 995 5316 (noch nicht veröffentlicht) beschriebenen Steckverbinder der eingangs genannten Art werden ausschließlich die optischen Komponenten der Verbinderteile miteinander verriegelt. Die Kopplung der beiden Verbinderteile erfolgt somit ausschließlich über eine solche optische Verriegelung.

Ziel der Erfindung ist es, einen Steckverbinder der eingangs genannten Art zu schaffen, der bei hoher Zuverlässigkeit möglichst einfach handhabbar ist.

Diese Aufgabe wird nach der Erfindung dadurch gelöst, daß eine Verriegelungsvorrichtung vorgesehen ist, über die die einem ersten Verbinderteil zugeordnete Ferrule mit dem anderen Verbinderteil verriegelbar ist, und daß eine von dieser Verriegelungsvorrichtung unabhängige Gehäusezusatzverriegelung vorgesehen ist, über die das Gehäuse des ersten Verbinderteils mit dem anderen Verbinderteil verriegelbar ist.

Aufgrund dieser Ausbildung erhält man eine Zusatzverriegelung, deren Toleranzfeld von der optischen Verriegelung entkoppelt ist. Es können somit problemlos insbesondere auch hybride Stecksysteme mit sowohl optischen als auch elektrischen Komponenten verwirklicht werden. Infolge der voneinander unabhängigen Funktionen der Gehäuseverriegelung einerseits und der optischen Verriegelung andererseits ergibt sich ein Höchstmaß an Zuverlässigkeit. Es sind beispielsweise Standardgehäuseverrastungen möglich. Durch die bekannten Steckvorgänge ist der Steckverbinder äußerst einfach handhabbar. Die Verrastung der optischen Bauteile kann beim Zusammenstecken der Verbinderteile automatisch erfolgen. Es ist ohne weiteres auch ein modularer oder hybrider Stekkeraufbau möglich. Die optische Verriegelung an sich kann beispielsweise so vorgesehen sein, wie dies in der DE 1 995 5316 beschrieben ist. Der Inhalt dieser DE 1 995 5316 wird hiermit durch Bezugnahme mit eingeschlossen.

Über die Zusatzverriegelung ist das Außengehäuse des ersten Verbinderteils vorzugsweise mit dem Außengehäuse des anderen Verbinderteils verriegelbar.

Bei einer zweckmäßigen praktischen Ausführungsform ist der Steckverbinder als hybrider Steckverbinder ausgeführt, über den mit einem jeweiligen Zusammenstecken der beiden Verbinderteile sowohl wenigstens eine optische und/oder elektrooptische als auch wenigstens eine elektrische Verbindung herstellbar ist.

Bei einer bevorzugten Ausführungsform umfaßt das erste Verbinderteil ein die Ferrule aufnehmendes Innenteil, ein in Steck- oder Axialrichtung über einen definierten Bereich relativ zum Innenteil bewegbares Gehäuse und ein in Steck- oder Axialrichtung jeweils über einen definierten Bereich sowohl relativ zum Innenteil als auch relativ zum Gehäuse bewegbares Sperrelement, das federnd am Innenteil abgestützt und durch die Federkraft in eine in Steckrichtung betrachtet vordere Sicherungsposition belastet ist, in der es bei zusammengesteckten Verbinderteilen die Verriegelung der Ferrule sichert, wobei das Sperrelement beim Zusammenstecken der beiden Verbinderteile zunächst entgegen der Federkraft aus seiner Sicherungsstellung herausbewegbar ist, um eine Verriegelung der Ferrule zu ermöglichen, und erst nach erfolgter Verriegelung der Ferrule wieder seine Sicherungsstellung einnimmt, und wobei das Sperrelement beim Trennen der beiden Verbinderteile mit einem Zurückziehen des Gehäuses relativ zum Innenteil entgegen der Federkraft aus seiner Sicherungsstellung herausbewegbar ist, um ein Entriegeln der Ferrule zu ermöglichen. Dabei ist das Gehäuse zweckmäßigerweise so mit dem Innenteil gekoppelt, daß das Innenteil beim Zusammenstecken der beiden Verbinderteile mit dem Gehäuse mitbewegbar und beim Trennen der beiden Verbinderteile zunächst über einen definierten Bereich hinweg unter Mitnahme des Sperrelements relativ zum Innenteil zurückbewegbar ist.

Bezüglich der betreffenden Verriegelung ergibt sich somit eine Art Gut- und Schlecht-Funktion, durch die eine hohe Zuverlässigkeit erreicht wird.

Das Sperrelement ist zweckmäßigerweise durch eine am Innenteil abgestützte Druckfeder in seine Sicherungsposition belastet.

Von Vorteil ist auch, wenn das Sperrelement durch ein vorzugsweise ringförmiges Schieberelement gebildet ist.

Bei einer zweckmäßigen praktischen Ausführungsform des erfindungsgemäßen Steckverbinders umfaßt die Verriegelungsvorrichtung wenigstens einen dem anderen Verbinderteil zugeordneten federnden Verriegelungsarm, der im Verlauf einer Relativverschiebung zwischen der Ferrule und dem anderen Verbinderteil zunächst entgegen der Federkraft durch das Ferrule auslenkbar und anschließend mit einer an der Ferrule vorgesehenen Verriegelungsfläche in Eingriff bringbar ist. Vorteilhafterweise sind wenigstens zwei einander gegenüberliegende Verriegelungsarme vorgesehen.

Die Verriegelungsfläche ist vorzugsweise durch eine an der Ferrule vorgesehene Nut gebildet. Bei dieser Nut kann es sich insbesondere um eine Umfangsnut handeln.

Eine bevorzugte praktische Ausführungsform zeichnet sich dadurch aus, daß das Sperrelement beim Zusammenstecken der beiden Verbinderteile zunächst am ausgelenkten Verriegelungsarm zur Anlage kommt und dadurch aus seiner Sicherungsstellung herausbewegbar ist, und anschließend nach einem Einrasten des Verriegelungsarmes in die Verriegelungsfläche infolge der Federkraft wieder seine Sicherungsstellung einnimmt, um den Verriegelungsarm in Eingriff mit der Verriegelungsfläche zu halten.

Von Vorteil ist auch, wenn das vorzugsweise ringförmige Sperrelement nach einem Einrasten des Verriegelungsarmes in die Verriegelungsfläche infolge der Federkraft zumindest teilweise über den Verriegelungsarm schiebbar ist.

Vorteilhafterweise ist wenigstens eines der beiden Verbinderteile mit in einem Außenrahmen angeordneten elektrischen Kontakten versehen. Indem die elektrischen Kontakte in einem solchen Außenrahmen angeordnet sind, wird die Zugbelastung der elektrischen Kabel über die betreffende Verriegelung unabhängig von der Optik auf das jeweils andere Verbinderteil übertragen.

Von Vorteil ist auch, wenn wenigstens eines der beiden Verbinderteile einen modularen Aufbau besitzt. So kann das erste Verbinderteil insbesondere einen die wenigstens eine Ferrule aufweisenden optischen Modul umfassen. Wenigstens eines der beiden Verbinderteile kann auch zumindest einen mit elektrischen Kontakten bestückten Elektromodul umfassen.

Bei einer bevorzugten Ausführungsform des erfindungsgemäßen Steckverbinders umfaßt wenigstens eines der beiden Verbinderteile zwei jeweils mit elektrischen Kontakten bestückte, von zwei einander gegenüberliegenden Seiten her in einen Außenrahmen einsetzbare Elektromodule.

Bei dem die optische Ferrule aufweisenden Verbinderteil kann es sich beispielsweise um ein Einsteckteil und bei dem anderen Verbinderteil beispielsweise um ein Aufnahmeteil oder einen sogenannten Header handeln. Das andere Verbinderteil kann aber auch ein insbesondere der gegenseitigen Verbindung von optischen Kabeln oder Lichtleitern dienendes In-line-Gehäuse umfassen, das wie bei Stecksystemen üblich aus einem Stecker und einer Kupplung gebildet sein kann. Die Gehäusezusatzverriegelung kann beispielsweise als "Pump Lock" ausgeführt sein.

Dem Steckverbinder kann beispielsweise auch ein Kontrollelement (CPA) zugeordnet sein, das in eine Endverrastung gebracht und über das kontrolliert werden kann, ob auch tatsächlich eine korrekte optische Verrastung erfolgt ist.

Die Erfindung wird im folgenden anhand eines Ausführungsbeispiels unter Bezugnahme auf die Zeichnung näher erläutert; in dieser zeigen:
- Fig. 1: eine schematische, perspektivische Ansicht eines zwei Verbinderteile umfassenden Steckverbinders für Lichtleiter im zusammengesteckten Zustand,
- Fig. 2: eine schematische, perspektivische Ansicht des die Ferrules aufweisenden ersten Verbinderteils,
- Fig. 3: eine schematische Vorderansicht des als Gegenstück dienenden anderen Verbinderteils,
- Fig. 4: eine schematische, perspektivische Ansicht der beiden Verbinderteile vor dem Zusammenstecken, wobei die Gehäuse der Verbinderteile teilweise weggebrochen sind,
- Fig. 5: eine schematische, perspektivische Ansicht des Steckverbinders, wobei die beiden Verbinderteile bereits so weit zusammengesteckt sind, daß die elektrische Kontaktierung unmittelbar bevorsteht,
- Fig. 6: eine schematische, perspektivische Ansicht des Steckverbinders, wobei die beiden Verbinderteile bereits so weit zusammengesteckt sind, daß die der optischen Verriegelung dienenden Verriegelungsarme auseinandergespreizt und das Sperrelement entgegen der Federkraft aus seiner Sicherungsstellung herausbewegt ist, und
- Fig. 7: eine schematische, perspektivische Ansicht des Steckverbinders, wobei die beiden Verbinderteile bereits vollständig zusammengesteckt sind.

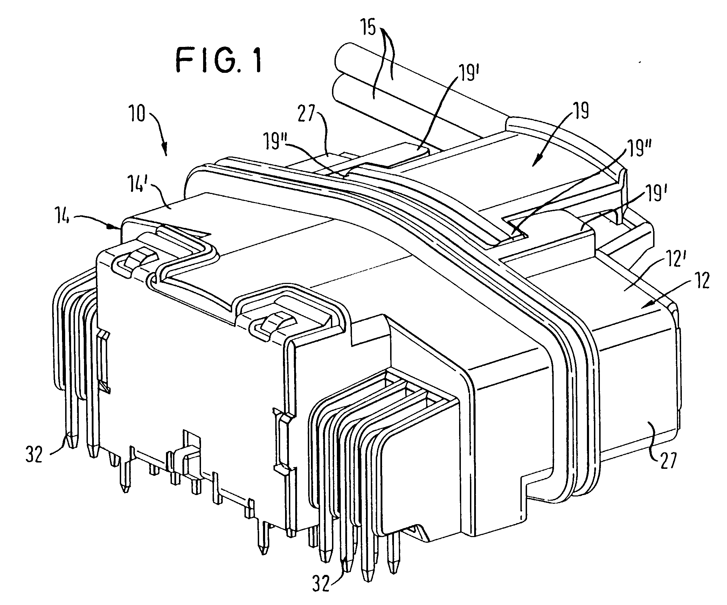

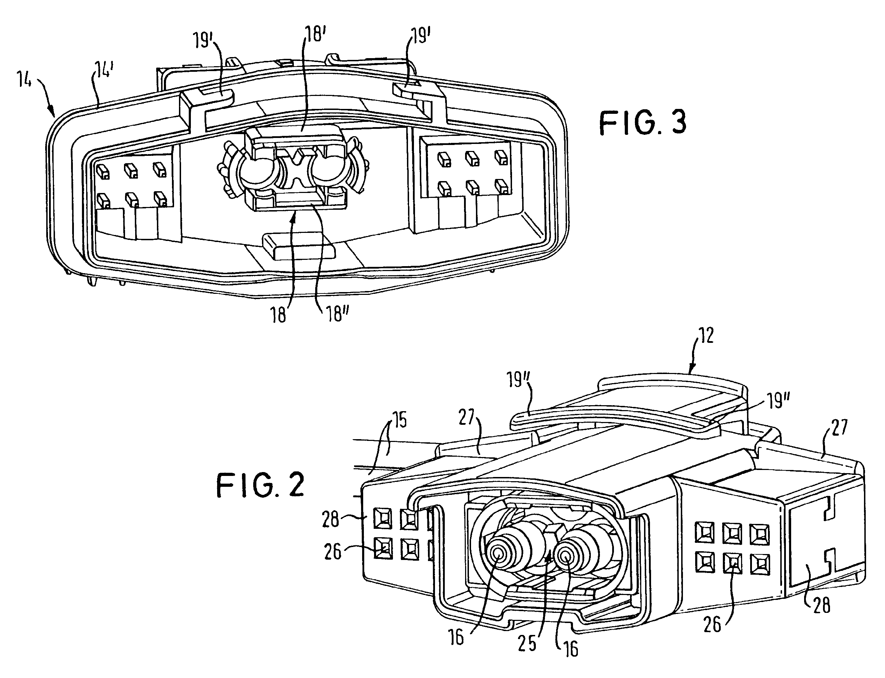

Die Fig. 1 bis 7 zeigen einen Lichtleiter-Steckverbinder 10 mit zwei zusammensteckbaren Verbinderteilen 12, 14, von denen das erste mit zwei optischen, zwingenartigen Ferrules 16 versehen ist. Die dem ersten Verbinderteil 12 zugeordneten, mit entsprechenden Lichtleitern 15 verbundenen Ferrules 16 sind über eine Verriegelungsvorrichtung 18 mit dem anderen Verbinderteil 14 verriegelbar. Darüber hinaus ist eine von dieser Verriegelungsvorrichtung 18 unabhängige Gehäusezusatzverriegelung 19 vorgesehen, über die das Gehäuse 12' des ersten Verbinderteils 12 mit dem anderen Verbinderteil 14 verriegelbar ist. Im vorliegenden Fall ist über die Zusatzverriegelung 19 das Außengehäuse 12' des ersten Verbinderteils 12 mit dem Außengehäuse 14' des anderen Verbinderteils 14 verriegelbar. Die Gehäusezusatzverriegelung 19 kann beispielsweise als "Pump Lock" ausgeführt sein. Im vorliegenden Fall umfaßt sie zwei am Verbinderteil 14 vorgesehene Rastarme 19', die mit am ersten Verbinderteil 12 vorgesehenen Gegenrastelementen 19" zusammenwirken.

Der Steckverbinder 10 kann insbesondere als hybrider Steckverbinder ausgeführt sein, über den mit einem jeweiligen Zusammenstecken der beiden Verbinderteile 12, 14 sowohl wenigstens eine optische und/oder elektrooptische als auch wenigstens eine elektrische Verbindung herstellbar ist.

Das erste Verbinderteil 12 umfaßt ein die Ferrules 16 aufnehmendes Innenteil 20, ein in Steck- oder Axialrichtung S über einen definierten Bereich relativ zum Innenteil 20 bewegbares Gehäuse 12' und ein in Steck- oder Axialrichtung S jeweils über einen definierten Bereich sowohl relativ zum Innenteil 20 als auch relativ zum Gehäuse 12' bewegbares Sperrelement 24.

Das Sperrelement 24 ist federnd am Innenteil 20 abgestützt und durch die Federkraft in eine in Steckrichtung S betrachtet vordere Sicherungsposition belastet, in der es bei zusammengesteckten Verbinderteilen 12, 14 die Verriegelung der Ferrules 16 sichert.

Dabei ist das Sperrelement 24 beim Zusammenstecken der beiden Verbinderteile 12, 14 zunächst entgegen der Federkraft aus seiner Sicherungsstellung herausbewegbar, um eine Verriegelung der Ferrules 16 zu ermöglichen. Erst nach erfolgter Verriegelung nimmt es wieder seine Sicherungsstellung ein.

Zum Trennen der beiden Verbinderteile 12, 14 muß zunächst die zwischen den beiden Außengehäusen 12', 14' vorgesehene Gehäusezusatzverriegelung 19 gelöst werden. Beim Trennen der beiden Verbinderteile 12, 14 ist das Sperrelement 24 mit einem Zurückziehen des Gehäuses 19' relativ zum Innenteil 20 entgegen der Federkraft aus seiner Sicherungsstellung herausbewegbar, um ein Entriegeln der Ferrules 16 zu ermöglichen.

Das Gehäuse 19' ist so mit dem Innenteil 20 gekoppelt, daß das Innenteil 20 beim Zusammenstecken der beiden Verbinderteile 12, 14 mit dem Gehäuse 19' mitbewegbar und beim Trennen der beiden Verbinderteile 12, 14 zunächst über einen definierten Bereich hinweg unter Mitnahme des Sperrelements 24 relativ zum Innenteil 20 zurückbewegbar ist.

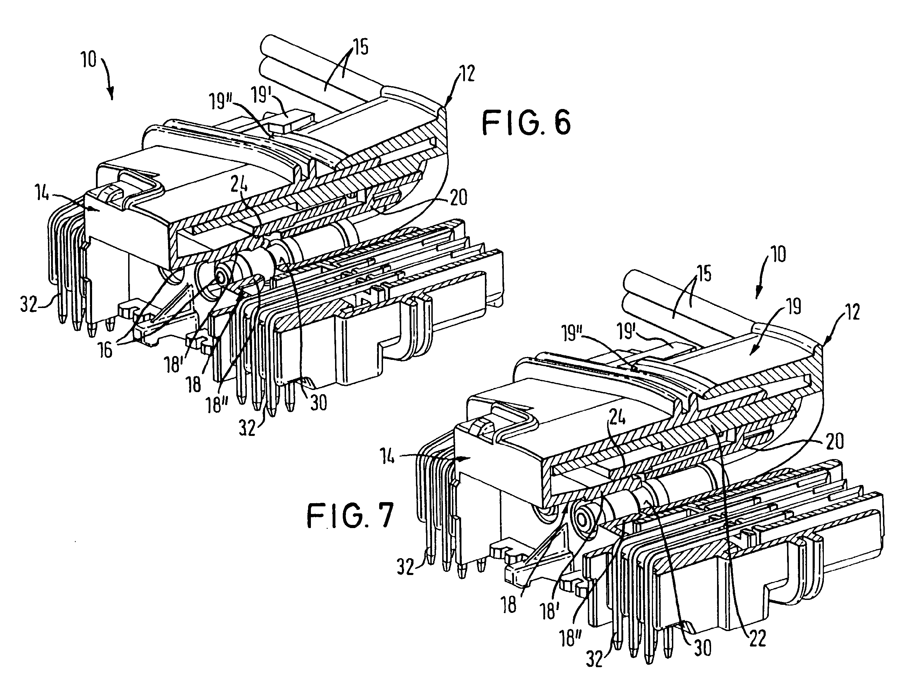

Das vorzugsweise als Schieberelement ausgeführte Sperrelement 24 kann beispielsweise durch eine am Innenteil 20 abgestützte Druckfeder 22 (vgl. beispielsweise Fig. 5) in seine Sicherungsposition belastet sein. Es kann beispielsweise auch ringförmig ausgebildet sein.

Das die Ferrules 16 aufweisende erste Verbinderteil 12 besitzt einen modularen Aufbau. Außer dem die Ferrules 16 aufweisenden optischen Modul 25 umfaßt es auch zwei jeweils mit elektrischen Kontakten 26 bestückte, von zwei einander gegenüberliegenden Seiten her in einen Außenrahmen 27 einsetzbare Elektromodule 28.

Die Verriegelungsvorrichtung 18 umfaßt wenigstens zwei dem anderen Verbinderteil 14 zugeordnete, einander gegenüberliegende federnde Verriegelungsarme 18', 18", die im Verlauf einer Relativverschiebung zwischen den Ferrules 16 und dem anderen Verbinderteil 14 zunächst entgegen der Federkraft durch die Ferrules 16 auslenkbar und anschließend mit an den Ferrules 16 vorgesehenen Verriegelungsflächen 30 in Eingriff bringbar sind. Dabei können mit einer jeweiligen Ferrule 16 beispielsweise zwei einander gegenüberliegende Verriegelungsarme 18', 18" zusammenwirken. Im vorliegenden Fall wirkt ein jeweiliger Verriegelungsarm jeweils mit beiden Ferrules 16 zusammen.

Die Verriegelungsflächen sind im vorliegenden Fall jeweils durch eine an der betreffenden Ferrule 16 vorgesehene Nut, insbesondere eine Umfangsnut 32 gebildet.

Das Sperrelement 24 kommt beim Zusammenstecken der beiden Verbinderteile 12, 14 zunächst an den auseinandergespreizten Verriegelungsarmen 18', 18" zur Anlage, wodurch es aus seiner Sicherungsstellung herausbewegt wird. Nach einem Einrasten der Verriegelungsarme 18', 18" in die Verriegelungsflächen 30 nimmt das Sperrelement 24 infolge der Kraft beispielsweise einer Druckfeder 22 wieder seine Sicherungsstellung ein, um die Verriegelungsarme 18', 18" in Eingriff mit den Verriegelungsflächen 30 zu halten. Dabei ist das Sperrelement 24 nach dem Einrasten der Verriegelungsarme 18', 18" in die Verriegelungsflächen 30 zumindest teilweise über die Verriegelungsarme 18', 18" schiebbar.

Dem anderen Verbinderteil 14 kann beispielsweise wenigstens ein elektrooptisches Modul zugeordnet sein. Unter einem solchen elektrooptischen Modul ist ein beliebig ausgeführtes Modul zu verstehen, in dem optische Signale in elektrische Signale und/oder elektrische Signale in optische Signale umgewandelt werden.

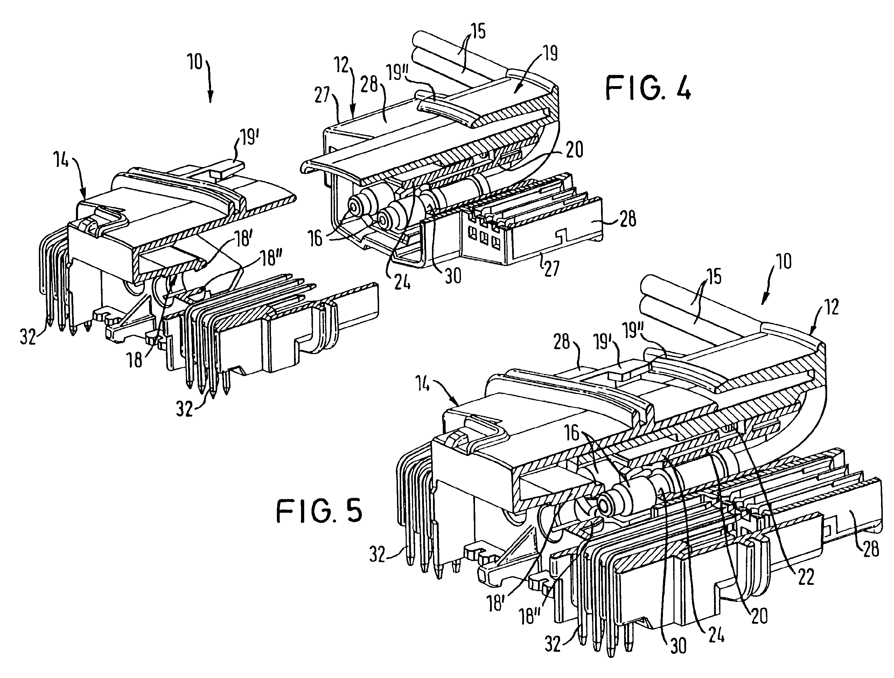

Fig. 4 zeigt den Steckverbinder 10 vor dem Zusammenstecken der beiden Verbinderteile 12, 14.

In der Darstellung gemäß Fig. 5 sind die beiden Verbinderteile 12, 14 bereits so weit zusammengesteckt, daß die elektrische Kontaktierung unmittelbar bevorsteht, d.h. die betreffenden, dem anderen Verbinderteil 14 zugeordneten elektrischen Kontakte 32 in die Elektromodule 28 des ersten Verbinderteils 12 eingeführt werden.

In der Darstellung gemäß Fig. 6 sind die beiden Verbinderteile 12, 14 bereits so weit zusammengesteckt, daß die der optischen Verriegelung dienenden Verriegelungsarme 18', 18" auseinandergespreizt und das Sperrelement 24 entgegen der Federkraft aus seiner Sicherungsstellung herausbewegt ist.

In der Darstellung gemäß Fig. 7 sind die beiden Verbinderteile 12, 14 bereits vollständig zusammengesteckt. In diesem Zustand ist somit sowohl die optische Verriegelung 18 als auch die Gehäusezusatzverriegelung 19 wirksam.

Im vorliegenden Fall ist das erste Verbinderteil 12 als Steckteil und das andere Verbinderteil 14 als Aufnahmeteil (z.B. Header) ausgeführt.

### Bezugszeichenliste

- 10: Steckverbinder
- 12: erstes Verbinderteil
- 12': Gehäuse
- 14: anderes Verbinderteil
- 14': Gehäuse
- 15: Lichtleiter
- 16: Ferrule
- 18: Verriegelungsvorrichtung
- 18', 18": federnde Verriegelungsarme
- 19: Gehäusezusatzverriegelung
- 19': Rastarme
- 19": Gegenrastelemente
- 20: Innenteil
- 22: Druckfeder
- 24: Sperrelement
- 25: optisches Modul
- 26: elektrische Kontakte
- 27: Außenrahmen
- 28: Elektromodul
- 30: Verriegelungsfläche, Nut, Umfangsnut
- 32: elektrische Kontakte
- S: Steck- oder Axialrichtung

## Patentansprüche

1. Steckverbinder (10) für Lichtleiter, mit zwei zusammensteckbaren Verbinderteilen (12, 14), von denen wenigstens eines mit einer optischen Ferrule (16) versehen ist,
**dadurch gekennzeichnet,**
**daß** eine Verriegelungsvorrichtung (18) vorgesehen ist, über die die einem ersten Verbinderteil (12) zugeordnete Ferrule (16) mit dem anderen Verbinderteil (14) verriegelbar ist, und daß eine von dieser Verriegelungsvorrichtung (18) unabhängige Gehäusezusatzverriegelung (19) vorgesehen ist, über die das Gehäuse (12') des ersten Verbinderteils (12) mit dem anderen Verbinderteil (14) verriegelbar ist.

2. Steckverbinder nach Anspruch 1,
**dadurch gekennzeichnet,**
**daß** über die Zusatzverriegelung (19) das Außengehäuse (12') des ersten Verbinderteils (12) mit dem Außengehäuse (14') des anderen Verbinderteils (14) verriegelbar ist.

3. Steckverbinder nach Anspruch 1 oder 2,
**dadurch gekennzeichnet,**
**daß** er als hybrider Steckverbinder (10) ausgeführt ist, über den mit einem jeweiligen Zusammenstecken der beiden Verbinderteile (12, 14) sowohl wenigstens eine optische und/oder elektrooptische als auch wenigstens eine elektrische Verbindung herstellbar ist.

4. Steckverbinder nach einem der vorhergehenden Ansprüche,
**dadurch gekennzeichnet,**
**daß** das erste Verbinderteil (12) ein die Ferrule (16) aufnehmendes Innenteil (20), ein in Steck- oder Axialrichtung (S) über einen definierten Bereich relativ zum Innenteil (20) bewegbares Gehäuse (12') und ein in Steck- oder Axialrichtung (S) jeweils über einen definierten Bereich sowohl relativ zum Innenteil (20) als auch relativ zum Gehäuse (12') bewegbares Sperrelement (24) umfaßt, das federnd am Innenteil (20) abgestützt und durch die Federkraft in eine in Steckrichtung (S) betrachtet vordere Sicherungsposition belastet ist, in der es bei zusammengesteckten Verbinderteilen (12, 14) die Verriegelung der Ferrule (16) sichert, wobei das Sperrelement (24) beim Zusammenstecken der beiden Verbinderteile (12, 14) zunächst entgegen der Federkraft aus seiner Sicherungsstellung herausbewegbar ist, um eine Verriegelung der Ferrule (16) zu ermöglichen, und erst nach erfolgter Verriegelung der Ferrule (16) wieder seine Sicherungsstellung einnimmt, und wobei das Sperrelement (24) beim Trennen der beiden Verbinderteile (12, 14) mit einem Zurückziehen des Gehäuses (19') relativ zum Innenteil (20) entgegen der Federkraft aus seiner Sicherungsstellung herausbewegbar ist, um ein Entriegeln der Ferrule (16) zu ermöglichen.

5. Steckverbinder nach Anspruch 4,
**dadurch gekennzeichnet,**
**daß** das Gehäuse (19') so mit dem Innenteil (20) gekoppelt ist, daß das Innenteil (20) beim Zusammenstecken der beiden Verbinderteile (12, 14) mit dem Gehäuse (19') mitbewegbar und beim Trennen der beiden Verbinderteile (12, 14) zunächst über einen definierten Bereich hinweg unter Mitnahme des Sperrelements (24) relativ zum Innenteil (20) zurückbewegbar ist.

6. Steckverbinder nach Anspruch 4 oder 5,
**dadurch gekennzeichnet,**
**daß** das Sperrelement (24) durch eine am Innenteil (20) abgestützte Druckfeder (22) in seine Sicherungsposition belastet ist.

7. Steckverbinder nach einem der vorhergehenden Ansprüche,
**dadurch gekennzeichnet,**
**daß** das Sperrelement (24) durch ein Schieberelement gebildet ist.

8. Steckverbinder nach Anspruch 7,
**dadurch gekennzeichnet,**
**daß** das Schieberelement (24) ringförmig ausgeführt ist.

9. Steckverbinder nach einem der vorhergehenden Ansprüche,
**dadurch gekennzeichnet,**
**daß** die Verriegelungsvorrichtung (18) wenigstens einen dem anderen Verbinderteil (14) zugeordneten federnden Verriegelungsarm (18', 18") umfaßt, der im Verlauf einer Relativverschiebung zwischen der Ferrule (16) und dem anderen Verbinderteil (14) zunächst entgegen der Federkraft durch das Ferrule (16) auslenkbar und anschließend mit einer an der Ferrule (16) vorgesehenen Verriegelungsfläche (30) in Eingriff bringbar ist.

10. Steckverbinder nach Anspruch 9,
**dadurch gekennzeichnet,**
**daß** wenigstens zwei einander gegenüberliegende Verriegelungsarme (18', 18") vorgesehen sind.

11. Steckverbinder nach Anspruch 9 oder 10,
**dadurch gekennzeichnet,**
**daß** die Verriegelungsfläche durch eine an der Ferrule (16) vorgesehene Nut (30) gebildet ist.

12. Steckverbinder nach Anspruch 11,
**dadurch gekennzeichnet,**
**daß** die Nut durch eine Umfangsnut (30) gebildet ist.

13. Steckverbinder nach einem der vorhergehenden Ansprüche,
**dadurch gekennzeichnet,**
**daß** das Sperrelement (24) beim Zusammenstecken der beiden Verbinderteile (12, 14) zunächst am ausgelenkten Verriegelungsarm (18', 18") zur Anlage kommt und dadurch aus seiner Sicherungsstellung herausbewegbar ist, und anschließend nach einem Einrasten des Verriegelungsarmes in die Verriegelungsfläche infolge der Federkraft wieder seine Sicherungsstellung einnimmt, um den Verriegelungsarm in Eingriff mit der Verriegelungsfläche zu halten.

14. Steckverbinder nach einem der vorhergehenden Ansprüche,
**dadurch gekennzeichnet,**
**daß** das vorzugsweise ringförmige Sperrelement (24) nach einem Einrasten des Verriegelungsarmes (18', 18") in die Verriegelungsfläche (30) infolge der Federkraft zumindest teilweise über den Verriegelungsarm (18', 18") schiebbar ist.

15. Steckverbinder nach einem der vorhergehenden Ansprüche,
**dadurch gekennzeichnet,**
**daß** wenigstens eines der beiden Verbinderteile (12, 14) mit in einem Außenrahmen (27) angeordneten elektrischen Kontakten (28) versehen ist.

16. Steckverbinder nach einem der vorhergehenden Ansprüche,
**dadurch gekennzeichnet,**
**daß** wenigstens eines der beiden Verbinderteile (12, 14) einen modularen Aufbau besitzt.

17. Steckverbinder nach einem der vorhergehenden Ansprüche,
**dadurch gekennzeichnet,**
**daß** das erste Verbinderteil (12) einen die wenigstens eine Ferrule (16) aufweisenden optischen Modul (25) umfaßt.

18. Steckverbinder nach einem der vorhergehenden Ansprüche,
**dadurch gekennzeichnet,**
**daß** wenigstens eines der beiden Verbinderteile (12, 14) zumindest einen mit elektrischen Kontakten (26) bestückten Elektromodul (28) umfaßt.

19. Steckverbinder nach Anspruch 18,
**dadurch gekennzeichnet,**
**daß** wenigstens eines der beiden Verbinderteile (12, 14) zwei jeweils mit elektrischen Kontakten (26) bestückte, von zwei einander gegenüberliegenden Seiten her insbesondere in einen Außenrahmen (27) einsetzbare Elektromodule (28) umfaßt.
